# EUROPÄISCHE PATENTSCHRIFT

(11) **EP 0 829 663 B1**
(45) Veröffentlichungstag und Bekanntmachung des Hinweises auf die Patenterteilung: **27.03.2002**
(21) Anmeldenummer: 97111594.4
(22) Anmeldetag: 09.07.1997
(51) Int. Cl.: F16J 15/34, F16J 15/36

(54) **Gleitringdichtung**
Mechanical face seal
Garniture mécanique d'étanchéité

(30) Priorität: 17.09.1996 DE 19637813
(43) Veröffentlichungstag der Anmeldung: 18.03.1998
(73) Patentinhaber: Carl Freudenberg KG, 69469 Weinheim (DE)
(72) Erfinder: Hintenlang, Armin, 68493 Hirschberg 1 (DE); Schäfer, Klaus, 68219 Mannheim (DE); Kraus, Reinhold, 69509 Mörlenbach (DE); Ewald, Kurt, 67227 Frankenthal (DE); Jaekel, Andreas, 69469 Weinheim (DE); Weis, Rolf, 69502 Hemsbach (DE); Schäfer, Erwin, 68519 Viernheim (DE); Stichler, Bernd, 71642 Ludwigsburg (DE)

(56) Entgegenhaltungen:
- DE-A- 4 109 234
- US-A- 3 592 479
- US-A- 4 451 049

## Beschreibung

### Technisches Gebiet

Die Erfindung betrifft eine Gleitringdichtung, umfassend einen Gleitring, der mit seiner Gleitfläche einen relativ unbeweglich an einer Welle festlegbaren Gegenring unter elastischer Vorspannung relativ verdrehbar und dichtend berührt, wobei der Gleitring auf der der Gleitfläche abgewandten Seite mittels einer Dichtung aus elastomerem Werkstoff an einem Haltering dichtend abgestützt ist, wobei der Haltering und ein Gehäuse, das einen im wesentlichen C-förmigen, in Richtung des Gleitrings offenen Querschnitt aufweist, durch eine Druckfeder verbunden sind.

### Stand der Technik

Eine solche Gleitringdichtung ist aus der DE 39 27 589 C2 bekannt. Die Dichtung überdeckt in axialer Richtung einen Großteil des Gleitrings und ist durch einen ersten Haltering, der ein erstes Widerlager für die Druckfeder bildet, unter Vorspannung an den Gleitring angepreßt. Die Dichtung der vorbekannten Gleitringdichtung weist eine an die Gestalt des Gehäuses angepaßte Form auf, mit einem im wesentlichen C-förmigen Querschnitt, der axial in Richtung des Gleitrings offen ist. Als zweites Widerlager ist ein zweiter Haltering vorgesehen, der innerhalb der Dichtung angeordnet ist. Die Abmessungen der vorbekannten Gleitringdichtung in axialer Richtung sind durch die Ausgestaltung und die Anordnung der Dichtung innerhalb des Gehäuses vergleichsweise groß. Insbesondere für Anwendungsfälle, bei denen der Einbauraum in axialer Richtung sehr kurz bemessen ist, ist die vorbekannte Gleitringdichtung wenig zufriedenstellend.

### Darstellung der Erfindung

Der Erfindung liegt die Aufgabe zugrunde, eine Gleitringdichtung der vorbekannten Art derart weiterzuentwickeln, daß diese deutlich verringerte Abmessungen in axialer Richtung aufweist, aus weniger Teilen besteht und in fertigungstechnischer Hinsicht einfach und kostengünstig herstellbar ist.

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist es vorgesehen, daß die Dichtung als ringförmiger Rollbalg ausgebildet ist und einen im wesentlichen N-förmigen Querschnitt mit einem ersten und zweiten Radialsteg aufweist, die durch einen Axialsteg verbunden sind und daß der erste Radialsteg die der Gleitfläche abgewandte Stimseite des Gleitrings und der zweite Radialsteg einen Innenschenkel des Gehäuses dichtend berührt. Dadurch, daß der ringförmige Rollbalg im Querschnitt betrachtet im wesentlichen N-förmig ausgebildet ist, baut die gesamte Gleitringdichtung in axialer Richtung sehr kurz. Bei Wellendurchmessem um 10 mm entspricht die axiale Ausdehnung der Gleitringdichtung im nicht-montierten Zustand dem Wellendurchmesser. Die Abdichtung des abzudichtenden Mediums erfolgt zwischen dem ersten Radialsteg und der der Gleitfläche abgewandten Stirnseite des Gleitrings sowie dem zweiten Radialsteg, der den Innenschenkel des Gehäuses unter radialer Vorspannung umfangsseitig dichtend umschließt. Die axiale Vorspannung des ersten Radialschenkels an den Gleitring erfolgt durch die Vorspannung, die durch die Druckfeder auf den Haltering aufgebracht wird, die radiale Vorspannung im wesentlichen durch die Elastizität des Rollbalgwerkstoffs selbst.

Der Haltering weist ein an die Form des Rollbalgs angepaßtes Profil auf. Zur raumsparenden Unterbringung der Druckfeder in der Gleitringdichtung überdeckt der Haltering den Gleitring in axialer Richtung zumindest teilweise und ist auf der dem Gegenring zugewandten Seite mit einem radial nach außen gerichteten Flansch zur Abstützung der Druckfeder versehen. Der Haltering ist derart ausgebildet, daß er sowohl den ersten Radialschenkel in axialer Richtung an den Gleitring als auch den zweiten Radialschenkel untersützend in radialer Richtung unter elastischer Vorspannung an den Außenumfang des Innenschenkels andrückt.

Der Haltering und der Rollbalg können unlösbar verbunden sein. Beispielsweise sind der Haltering und der Rollbalg miteinander vulkanisiert. Hierbei ist von Vorteil, daß die Montage der Gleitringdichtung dadurch vereinfacht ist, daß der Haltering und der Rollbalg als vormontierbare Einheit ausgebildet sind.

Der erste Radialsteg berührt unter elastischer Vorspannung axial auf der dem Gleitring abgewandten Seite den Haltering unter Vermeidung einer reibungsbehafteten Relativbewegung anliegend.

Der zweite Radialsteg berührt radial innenseitig den Innenschenkel und radial außenseitig den Haltering jeweils unter Vermeidung einer reibungsbehafteten Relativbewegung anliegend. Hierbei ist von Vorteil, daß der N-förmige Rollbalg ausgezeichnete Gebrauchseigenschaften während der gesamten Gebrauchsdauer der Gleitringdichtung aufweist. Bei relativen Axialverlagerungen des Gleitrings relativ zum Gehäuse, die beispielsweise durch Wärmedehnungen bedingt sind, findet zwischen der Außenumfangsseite des zweiten Radialstegs und dem Bereich des Halterings, der vom zweiten Radialsteg unter elastischer Vorspannung anliegend berührt wird, eine Abrollbewegung statt. Abrasiver Verschleiß wird dadurch in diesem Bereich vollständig vermieden. Der Rollbalg ist lediglich einer Walkbeanspruchung ausgesetzt, die jedoch keine nachteiligen Auswirkungen auf die Lebensdauer des Rollbalgs hat.

Der Haltering und das Gehäuse bestehen aus einem zähharten, rostfreien Werkstoff. Bevorzugt gelangen metallische Werkstoffe zur Anwendung, da diese bei kleinen Abmessungen eine große Festigkeit aufweisen und Relaxationserscheinungen, die zu einer unerwünschten Veränderung der Gebrauchseigenschaften der Gleitringdichtung führen, zuverlässig ausgeschlossen sind.

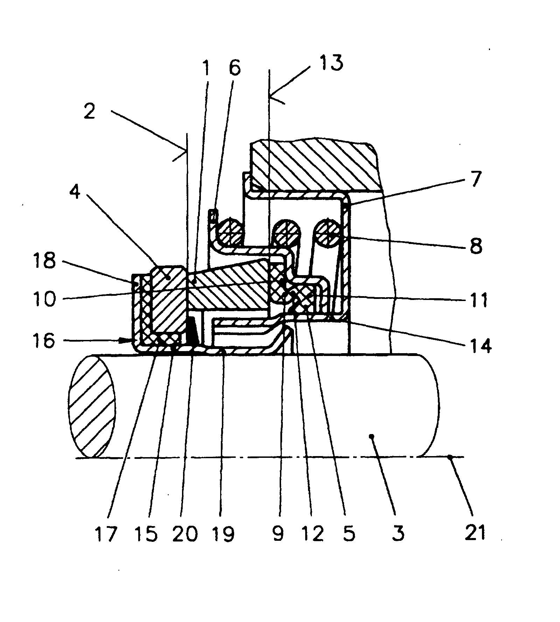

Ein Ausführungsbeispiel der erfindungsgemäßen Gleitringdichtung wird nachfolgend anhand der Zeichnung weiter verdeutlicht.

### Ausführung der Erfindung

In der Zeichnung ist ein Ausführungsbeispiel einer erfindungsgemäßen Gleitringdichtung in vergrößerter Darstellung schematisch gezeigt. Der Gegenring 4 umschließt einen Mitnehmer 15, der im wesentlichen L-förmig ausgebildet und auf den Außenumfang der Welle 3 aufgepreßt ist. Der Mitnehmer 15 ist vom Gegenring 4 mit radialem Abstand umschlossen wobei in dem durch den Abstand gebildeten Spalt 16 ein Dichtring 17 aus elastomerem Werkstoff angeordnet ist. Der Dichtring 17 weist in diesem Ausführungsbeispiel einen L-förmigen Querschnitt auf und ist unter axialer Vorspannung zwischen dem Radialschenkel 18 des Mitnehmers 15 und der dem Gleitring 1 abgewandten Stimseite des Gegenrings 4 angeordnet. Auf dem Axialschenkel 19 des Mitnehmers 15 ist ein Druckring 20 angeordnet, der als Tellerfeder ausgebildet ist und die dem Gleitring 1 zugewandte Stimseite des Gegenrings 4 anliegend berührt. Bei einer derartigen Ausgestaltung ist von Vorteil, daß der Mitnehmer 15, der Dichtring 17, der Gegenring 4 und der Druckring 20 eine vormontierbare Einheit bilden. Diese Teile sind auch im nicht-montierten Zustand der Gleitringdichtung unverlierbar miteinander verbunden. Die Montage der Gleitringdichtung wird dadurch wesentlich vereinfacht.

Der Mitnehmer 15 und der Druckring 20 bestehen aus einem nichtrostenden Stahl, während der Gegenring 4 bevorzugt aus einem keramischen Werkstoff besteht und dadurch während der gesamten Gebrauchsdauer der Gleitringdichtung nahezu keinen Verschleiß aufweist.

Die Einheit, bestehend aus Mitnehmer 15, Dichtring 17, Gegenring 4 und Druckring 20 bewegt sich während der bestimmungsgemäßen Verwendung der Gleitringdichtung gemeinsam mit der Welle 3 um die Rotationsachse 21.

Der Gleitring 1 berührt die ihm zugewandte Stirnseite des Gegenrings 4 unter elastischer Vorspannung anliegend. Die elastische Vorspannung wird durch die Druckfeder 8 bewirkt, die sich in axialer Richtung einerseits im Gehäuse 7 und in axialer Richtung andererseits am Haltering 6 abstützt. Die Federkraft wird vom Haltering 6 auf die Dichtung 5, die als N-förmiger Rollbalg 9 ausgebildet ist, übertragen und vom Rollbalg 9 unmittelbar auf die Stimfläche des Gleitrings 1, die der Gleitfläche 2 gegenüber liegt.

Der Rollbalg 9 weist einen ersten 10 und einen zweiten Radialsteg 11 auf, die durch den Axialsteg 12 verbunden sind. Der erste Radialsteg 10 ist unter axialer Vorspannung zwischen dem Haltering 6 und der dem Haltering 6 zugewandten Stimseite des Gleitrings 1 angeordnet. Der zweite Radialsteg 11 ist demgegenüber unter radialer Vorspannung zwischen dem Haltering 6 und dem Innenschenkel 14 des Gehäuses 7 angeordnet.

Durch die Ausgestaltung und Anordnung des Halterings 6 und des Rollbalgs 9 weist die gesamte Gleitringdichtung außerordentlich geringe Abmessungen in axialer Richtung auf. Im hier gezeigten Ausführungsbeispiel beträgt sowohl der Durchmesser der Welle als auch die axiale Ausdehnung der Gleitringdichtung 12 mm.

Bei axialen Relativverlagerungen der Welle 3 bezogen auf das Gehäuse 7 muß der Rollbalg 9 der Verlagerung folgen. Die Berührungsfläche zwischen dem Außenumfang des zweiten Radialstegs 11 und dem Haltering 6 unterliegt dabei keinem abrasiven Verschleiß. Der zweite Radialsteg 11 des Rollbalgs 9 rollt auf der Innenumfangsfläche des Halterings 6 ab. Reibungsbehaftete Relativbewegungen, die eine Beeinträchtigung der Gebrauchseigenschaften bedingen, werden dadurch vermieden.

## Patentansprüche

1. Gleitringdichtung, umfassend einen Gleitring (1), der mit seiner Gleitfläche (2) einen relativ unbeweglich an einer Welle festlegbaren Gegenring (4) unter elastischer Vorspannung relativ verdrehbar und dichtend berührt, wobei der Gleitring auf der der Gleitfläche abgewandten Seite mittels einer Dichtung (5) aus elastomerem Werkstoff an einem Haltering (6) dichtend abgestützt ist, wobei der Haltering und ein Gehäuse (7), das einen im wesentlichen C-förmigen, in Richtung des Gleitrings offenen Querschnitt aufweist, durch eine Druckfeder (8) verbunden sind, **dadurch gekennzeichnet, daß** die Dichtung (5) als ringförmiger Rollbalg (9) ausgebildet ist und einen im wesentlichen N-förmigen Querschnitt mit einem ersten (10) und zweiten Radialsteg (11) aufweist, die durch einen Axialsteg (12) verbunden sind und daß der erste Radialsteg (10) die der Gleitfläche (2) abgewandte Stimseite (13) des Gleitrings (1) und der zweite Radialsteg (11) den Innenschenkel (14) des Gehäuses (7) dichtend berührt.

2. Gleitringdichtung nach Anspruch 1, **dadurch gekennzeichnet, daß** der Haltering (6) ein an die Form des Rollbalgs (9) angepaßtes Profil aufweist.

3. Gleitringdichtung nach einem der Ansprüche 1 bis 2, **dadurch gekennzeichnet, daß** der Haltering (6) und der Rollbalg (9) unlösbar verbunden sind.

4. Gleitringdichtung nach einem der Ansprüche 1 bis 3, **dadurch gekennzeichnet, daß** der erste Radialsteg (10) unter elastischer Vorspannung axial auf der dem Gleitring (1) abgewandten Seite den Haltering (6) unter Vermeidung einer reibungsbehafteten Relativbewegung anliegend berührt.

5. Gleitringdichtung nach einem der Ansprüche 1 bis 4, **dadurch gekennzeichnet, daß** der zweite Radialsteg (11) radial innenseitig den Innenschenkel (14) und radial außenseitig den Haltering (6) jeweils unter Vermeidung einer reibungsbehafteten Relativbewegung anliegend berührt

6. Gleitringdichtung nach einem der Ansprüche 1 bis 5, **dadurch gekennzeichnet, daß** der Haltering (6) und das Gehäuse (7) aus einem zähharten, rostfreien Werkstoff bestehen.

## Claims

1. A mechanical seal, comprising a sliding ring (1) which, with its sliding face (2), contacts a mating ring (4), which can be secured to a shaft so as to be relatively fixed, in a relatively rotatable and sealing manner under elastic prestress, the sliding ring, on the side remote from the sliding face, being supported on a holding ring (6) in a sealing manner by means of a seal (5) of elastomeric material, the holding ring and a housing (7), which has an essentially C-shaped cross section open in the direction of the sliding ring, being connected by a compression spring (8), **characterized in that** the seal (5) is designed as an annular rolling bellows (9) and has an essentially N-shaped cross section with a first radial web (10) and a second radial web (11), which are connected by an axial web (12), and **in that** the first radial web (10) contacts, in a sealing manner, that end face (13) of the sliding ring (1) which is remote from the sliding face (2), and the second radial web (11) contacts the inner leg (14) of the housing (7) in a sealing manner.

2. A mechanical seal according to claim 1, **characterized in that** the holding ring (6) has a profile adapted to the shape of the rolling bellows (9).

3. A mechanical seal according to either of claims 1 and 2, **characterized in that** the holding ring (6) and the rolling bellows (9) are inseparably connected.

4. A mechanical seal according to any one of claims 1 to 3, **characterized in that** the first radial web (10), under elastic prestress, axially contacts the holding ring (6) in a close-fitting manner on the side remote from the sliding ring (1) while avoiding a relative movement subject to friction.

5. A mechanical seal according to any one of claims 1 to 4, **characterized in that** the second radial web (11), in a close-fitting manner, contacts the inner leg (14) radially on the inside and the holding ring (6) radially on the outside, in each case while avoiding a relative movement subject to friction.

6. A mechanical seal according to any one of claims 1 to 5, **characterized in that** the holding ring (6) and the housing (7) are made of a tough, stainless material.

## Revendications

1. Garniture mécanique d'étanchéité, comprenant un anneau de glissement (1) qui, par sa surface de glissement (2), est en contact étanche, sous l'effet d'une précontrainte élastique et d'une manière permettant une torsion relative, avec un contre-anneau (4) pouvant être fixé de manière relativement immobile sur un arbre, l'anneau de glissement étant appuyé de manière étanche sur une bague de maintien (6), au moyen d'un joint d'étanchéité (5) en élastomère, sur le côté éloigné de la surface de glissement, la bague de maintien étant reliée, par un ressort de compression (8), à un boîtier (7) dont la section transversale a essentiellement la forme d'un C et est ouverte en direction de l'anneau de glissement, **caractérisée en ce que** le joint d'étanchéité (5) est exécuté en tant que soufflet mobile (9) annulaire et est pourvu d'une section transversale ayant essentiellement une forme en N, avec une première branche radiale (10) et une seconde branche radiale (11) qui sont reliées par une branche axiale (12), et **en ce que** la première branche radiale (10) est en contact étanche avec le côté frontal (13) de l'anneau de glissement (1) éloigné de la surface de glissement (2) et la seconde branche radiale (11) est en contact étanche avec la branche intérieure (14) du boîtier (7).

2. Garniture mécanique d'étanchéité selon la revendication 1, **caractérisée en ce que** la bague de maintien (6) possède un profil adapté à la forme du soufflet mobile (9).

3. Garniture mécanique d'étanchéité selon l'une des revendications 1 à 2, **caractérisée en ce que** la bague de maintien (6) et le soufflet mobile (9) sont reliés de manière permanente.

4. Garniture mécanique d'étanchéité selon l'une des revendications 1 à 3, **caractérisée en ce que** la première branche radiale (10) est en contact étroit, dans le sens axial, avec la bague de maintien (6) sur le côté éloigné de l'anneau de glissement (1), sous l'effet d'une précontrainte élastique, en évitant un mouvement relatif sujet au frottement.

5. Garniture mécanique d'étanchéité selon l'une des revendications 1 à 4, **caractérisée en ce que** la seconde branche radiale (11) est en contact étroit avec la branche intérieure (14) sur son côté intérieur dans le sens radial et avec la bague de maintien (6) sur son côté extérieur dans le sens radial, en évitant à chaque fois un mouvement relatif sujet au frottement.

6. Garniture mécanique d'étanchéité selon l'une des revendications 1 à 5, **caractérisée en ce que** la bague de maintien (6) et le boîtier (7) sont formés d'un matériau rigide antirouille.
